Europäisches Patentamt

European Patent Office

Office européen des brevets

(11) Veröffentlichungsnummer: **0 144 092**
**B1**

(19)

# (12) EUROPÄISCHE PATENTSCHRIFT

(45) Veröffentlichungstag der Patentschrift:
12.10.88

(21) Anmeldenummer: **84114634.3**

(22) Anmeldetag: **01.12.84**

(51) Int. Cl.⁴: **A 21 C 1/06, B 01 F 7/04**

(54) **Misch- und Knetmaschine.**

(30) Priorität: **05.12.83 CH 6489/83**
**15.06.84 BR 8402947**

(43) Veröffentlichungstag der Anmeldung:
**12.06.85 Patentblatt 85/24**

(45) Bekanntmachung des Hinweises auf die Patenterteilung:
**12.10.88 Patentblatt 88/41**

(84) Benannte Vertragsstaaten:
**CH DE FR GB IT LI SE**

(56) Entgegenhaltungen:
**CH-A-277 294**
**DE-A-2 012 294**
**DE-A-2 621 266**
**DE-B-1 199 737**
**DE-C-33 278**
**US-A-2 794 626**
**US-A-3 498 762**

(73) Patentinhaber: **Dipl.- Ing. H. List Industrielle**
**Verfahrenstechnik, Vogelmattstrasse 15, CH- 4133**
**Pratteln 2 (CH)**

(72) Erfinder: **List, Heinz, Blözenweg 6, CH- 4133**
**Pratteln (CH)**
Erfinder: **Kunz, Alfred, Sternenbergweg 11, CH-**
**4108 Witterswil (CH)**

(74) Vertreter: **EGLI- EUROPEAN PATENT ATTORNEYS,**
**Horneggstrasse 4, CH- 8008 Zürich (CH)**

LIBER, STOCKHOLM 1988

## Beschreibung

Die Erfindung betrifft eine Misch- und Knetmaschine mit mindestens zwei unterschiedlich schnell angetriebenen Wellen, die von einem gemeinsamen, horizontal oder geneigt angeordneten Gehäuse umschlossen sind, das für den kontinuierlichen Produktdurchlauf einen Zu- und Ablauf aufweist, und mit an den Wellen vorgesehenen Knetelementen, die zahnradartig ineinandergreifen und einen eine axiale Förderung bewirkenden Steigungswinkel aufweisen, wobei mindestens die Knetelemente der schneller angetriebenen Welle in Wellenlängsrichtung mit Abstand nebeneinander angeordnet sind.

Eine Maschine dieser Art ist beispielsweise durch die CH-A-506 322 bekannt. Die Knetelemente der zweiten Welle haben dort die Aufgabe, die Hauptwelle und deren scheibenförmige Knetelemente zu reinigen, da bei der Durchführung von insbesondere thermischen Reaktionen in der Maschine das Produkt dazu neigt, an den Flächen anzuhaften. Für eine verbesserte Misch- und Knetwirkung ist es erstrebenswert, beide Wellen mit verschiedener Geschwindigkeit anzutreiben, so dass in einem Teil der Maschine eine stärkere Produktbewegung erfolgt mit einem Produktaustausch mit dem anderen Teil der Maschine. Da die einen Steigungswinkel aufweisenden Knetarme bei kontinuierlichem Produktdurchlauf jedoch eine schnellere Produktförderung in dem Teil der Maschine bewirken, der die schneller angetriebene Welle einschliesst, ergibt sich eine ungleichmässige Verweilzeitverteilung des Produktes in der Maschine.

Die Knetelemente dieser bekannten Maschine haben sich parallel zur Gehäusewand und in Gehäuselängsrichtung erstreckende Knetarme, so dass sie annähernd bügelförmig gestaltet sind. Insbesondere bei der Behandlung eines pastösen oder teigigen Produktes zeigt es sich jedoch häufig, dass das Produkt auch an den Knetarmen anhaftet und sich, ohne eine weitere Mischung oder Knetung zu erfahren, mit dem Knetelement bewegt. Bereits anhaftendes Produkt bewirkt weiteres Anhaften, so dass der von der Bügelform umschlossene Raum des Knetelementes sich durch das Produkt verschliesst.

In der US-A-3 498 762 wird ein Mischer gezeigt, bei dem flüssige Komponenten aus einer viskosen Flüssigkeit verdampft werden. Dabei drehen Räder in Kammern, welche durch Wände voneinander abgeteilt sind, damit ein Überfliessen verhindert wird. Diese Vorrichtung ist lediglich für flüssiges Behandlungsgut geeignet, nicht jedoch beispielsweise für viskos-pastöse Produkte, die in Misch- und Knetmaschinen behandelt werden. Die Wände würden dazu führen, dass dieses viskos-pastöse Produkt überhaupt nicht weitergefördert wird.

Der Erfindung liegt die Aufgabe zugrunde, eine Maschine der genannten Art zu finden, die eine verbesserte Misch- und Knetwirkung und vor allem eine vergleichmässigung der Verweilzeit des Produktes in der Maschine aufweist und die in stärkerem Masse ihre mit dem Produkt in Kontakt gelangenden Flächen selbst reinigt.

Für die Lösung dieser Aufgabe wird eine Maschine mit den Merkmalen des Patentanspruchs 1 vorgeschlagen.

Durch die erfindungsgemäss vorgesehenen Stauplatten wird eine zu schnelle Produktförderung in Maschinenlängsrichtung verhindert, so dass das Produkt vermehrt in Querrichtung von den Knetelementen der einen Welle zu den Knetelementen der anderen Welle hin gefördert wird. Die damit verbundene stärkere Misch- und Knetwirkung in der gesamten Maschine führt folglich auch zu einer engeren Verweilzeitverteilung des Produktes in der Maschine und damit zu einer verbesserten Qualität des Produktes.

Die Anordnung der Stauplatte bzw. der Platten oberhalb des Gehäusebodens vermeidet eine zu starke Behinderung des Transportes von beispielsweise viskos-pastösen Produkten, wobei dennoch diese Stauplatten zu einer Verzögerung der Produktförderung führen.

Die Grösse der Stauplatten kann in Abhängigkeit von der Stärke des gewünschten Staueffektes so gewählt werden, dass sie sich über einen Winkel von mehr als 90° um die schneller laufende Welle herum erstrecken. Dabei kann je eine Stauplatte in jeder Lücke zwischen den Knetelementen vorgesehen sein. Statt nur einer sich in Gehäuseumfangsrichtung erstreckenden Stauplatte können auch mehrere kürzere Plattenstücke in Umfangsrichtung nebeneinander angeordnet sein. Eine ununterbrochene Stauplatte hat jedoch den Vorteil, dass sie weniger Flächen aufweist, die durch Vorbeibewegung der Knetelemente nicht gereinigt werden. Auf ansich bekannte Weise können die Knetelemente der sich langsamer drehenden Welle beheizte Scheiben aufweisen, an denen die Knetelemente der schneller laufenden Welle reinigend vorbeistreichen.

In manchen Fällen wird es sich als zweckmässig erweisen, die Stauplatten an den Gehäusedeckel selbst zu montieren. Diese Montage kann sowohl bei der Herstellung der Maschinen als auch nachträglich bei ihrer Wartung erfolgen.

Die evolventenartig verlaufenden Flächen der Knetelemente der schneller laufenden Welle werden aufgrund ihrer Formgebung durch die Knetarme der langsamer laufenden Welle gereinigt, da diese sich an diesen Fläche entlang bewegen. Um der stärkeren Transportwirkung der geschlossenen evolventenförmigen Flächen der Knetelemente entgegenzuwirken, kann vorteilhaft mindestens eine Stauplatte vorgesehen sein, die zwischen den Knetelementen angeordnet ist.

Ein beschleunigter Produktaustrag kann in einem besonderen austrittsseitigen Gehäuse verhindert werden, in welchem die Knetelemente keinen die Förderung bewirkenden Steigungswinkel aufweisen. Die Produktförderung kann zusätzlich in diesem austrittsseitigen Gehäuse durch Stauelemente, z. B. in Form von Platten, abgebremst werden, die zwischen den Knetelementen dort vorgesehen sind. Diese Stauelemente verhindern auch ein Mitdrehen des Produktes mit den Knetelementen.

Im folgenden wird die Erfindung anhand von in den Zeichnungen dargestellten Ausführungsbeispielen beschrieben. Es zeigen:

Fig. 1 eine Aufsicht auf eine zweiwellige Maschine mit teilweise weggebrochenem Oberteil, so dass die Wellen mit den Knetelementen sichtbar sind;

Fig. 2 einen vertikalen Querschnitt entlang der Linie II - II der Fig. 1 entsprechend einem Ausführungsbeispiel mit am Gehäuseunterteil befestigten Stauplatten;

Fig. 3 eine Darstellung entsprechend Fig. 2 mit am Gehäusedeckel befestigten Stauplatten;

Fig. 4a - 4c einen vertikalen Querschnitt durch ein weiteres Ausführungsbeispiel ähnlich Fig. 3 in drei verschiedenen Drehpositionen und

Fig. 5 eine Aufsicht auf eine zweite Ausführungsform der Maschine mit im Bereich des Austrittsendes weggebrochenem Flanschdeckel.

Die Maschine hat ein Arbeitsgehäuse 1 mit zwei Gehäuseteilen 1a und 1b in Form von parallel zueinander verlaufenden und ineinander übergehenden Kreiszylindern, so dass der Querschnitt des Gehäuses 1 die Form einer liegenden Acht hat. Das Gehäuse 1 ist im oberen Teil mit einem abnehmbaren Flanschdeckel 2 abgeschlossen, auf dem ein Einlaufstutzen 3 vorgesehen ist. Der Deckelflansch 14 ist durch nicht dargestellte Klemmmittel, wie Schrauben oder Klammern, dicht mit dem Flansch 15 des Gehäuseunterteils 16 verbunden.

Die Durchströmung der Maschine erfolgt von dem am einen axialen Ende des Maschinengehäuses 1 vorgesehenen Einlaufstutzen 3 zu dem am anderen axialen Ende im Gehäuseboden vorgesehenen Auslaufstutzen 4.

Eine langsamer laufende Welle 5 und eine schneller laufende Welle 6 sind auf beiden Gehäuseseiten in Lagern 7 und 8 bzw. 9 und 10 gelagert. Auf der Antriebsseite befinden sich die Lager in einem Getriebe 11, das mittels eines Verbindungsgehäuses 12 (Laterne) an der Stirnseite der Maschine angeflanscht ist und beide Wellen 5 und 6 mit einem gewünschten Drehzahlverhältnis miteinander verbindet. Auf der Gehäuseaustrittsseite sind die Lager in einem ebenfalls angeflanschten Gehäuseteil 13 (Laterne) angeordnet.

Der Antrieb erfolgt vom Antriebszapfen 6a aus, der sich an der schneller laufeden Welle 6 befindet, die über ein nicht dargestelltes Zahnradpaar des Getriebes 11 die langsamer mitlaufende Welle 5 antreibt, im vorliegenden Fall mit einem Drehzahlverhältnis von 4 : 1.

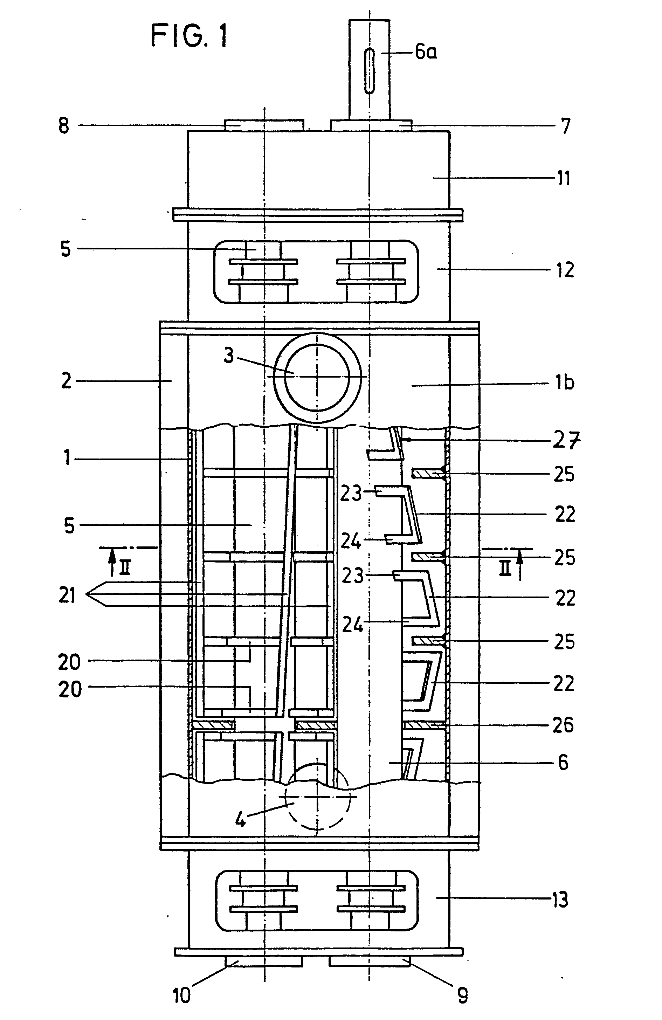

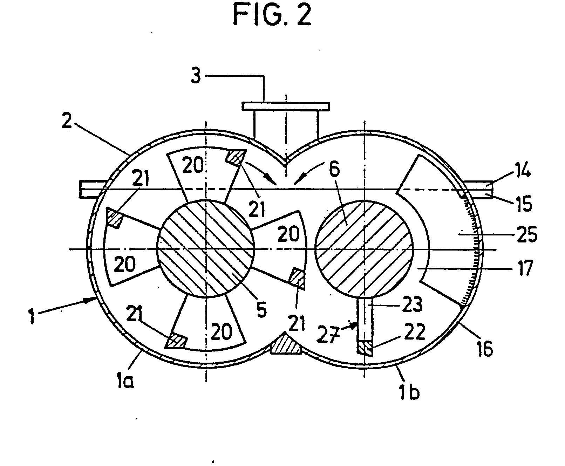

Die langsamer laufende Welle 5 trägt an ihrem Umfang vier in gleichmässigem Umfangsabstand voneinander angeordnete Knetelemente (Fig. 2) mit mehreren in axialer Richtung nebeneinander angeordneten kreissektorförmigen Scheiben 20, die durch einen mit geringer Steigung parallel zur Gehäusewand verlaufenden Knetarm 21 miteinander verbunden sind (Fig. 1). Die Scheibenelemente verlaufen jeweils in einer zur Welle 5 senkrechten Ebene und sind vorzugsweise ebenso wie das Gehäuse 1 beheizt. Zur Vereinfachung der Darstellung sind die Heizkanäle für ein Heizmedium nicht dargestellt; es versteht sich jedoch, dass in diesem Fall die Welle 5 hohl ausgebildet und das Gehäuse zusammen mit später beschriebenen Stauplatten 25 doppelwandig ist.

Im Gegensatz zu der langsamer laufenden Welle 5 hat die schneller laufende, auch als Putzwelle bezeichnete Welle 6 mehrere in axialer Richtung nebeneinander angeordnete Knetelemente 27, so dass die Scheiben 20 der langsamer laufenden Welle 5 sich durch eine Lücke zwischen den Knetelementen 27 hindurchbewegen können, wenn die Knetarme 21 der langsamer laufenden Welle 5 mit den Knetelementen 27 der schneller laufenden Welle zahnradartig kämmend in gegenseitigen Eingriff gelangen.

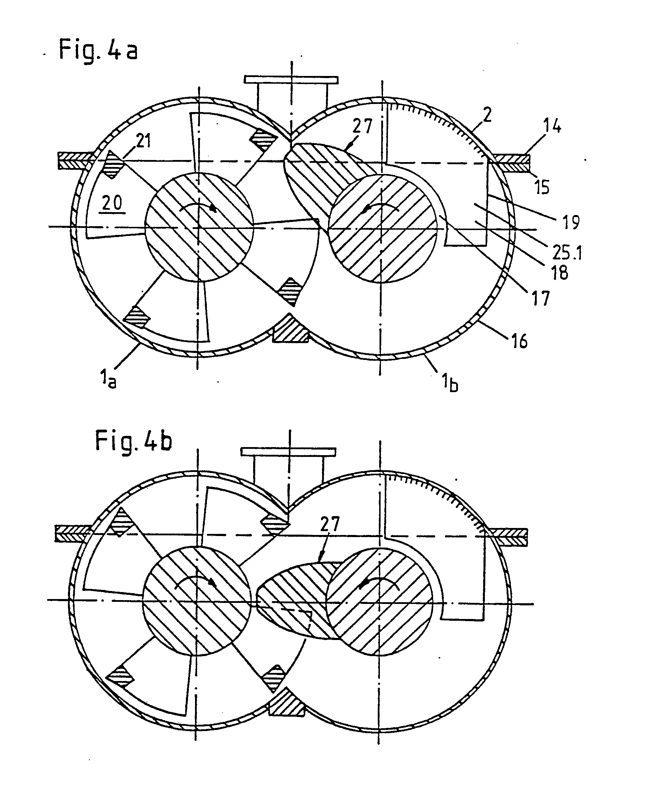

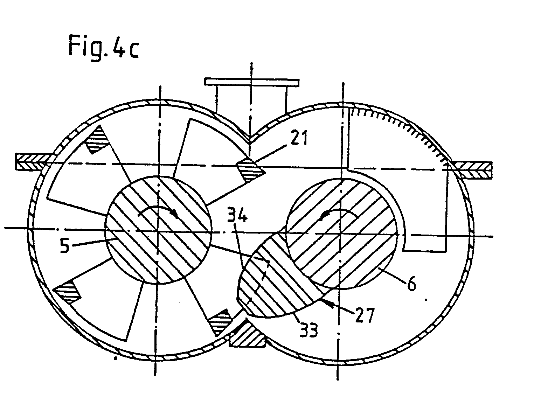

Die Knetarme 21 der langsamer laufenden Welle 5 und die Knetelemente 27 der schneller laufenden Welle 6 haben eine Steigung, wie der Darstellung in Fig. 1 zu entnehmen ist. Dies gilt auch für die Ausführungsform der Knetelemente 27 nach Fig. 4, obwohl dort eine entsprechende perspektivische Darstellung der Übersichtlichkeit halber vernachlässigt wurde. Sie verlaufen parallel zur Gehäusewand, so dass sie ähnlich einer Schraubenlinie oder einer Förderschnecke bei Drehung der Welle eine Förderung in deren Längsrichtung bewirken, d.h. bei entsprechender Drehrichtung in Richtung zu dem Auslaufstutzen 4 hin. Wenn die Knetelemente 27 der einen Welle sich kämmend an den Knetarmen 21 der anderen Welle vorbeibewegen sollen, so müssen die sich schneller bewegenden Knetelemente 27, von denen in Wellenumfangsrichtung jeweils nur eines vorhanden ist, einen entsprechend grösseren Steigungswinkel ihres schraubenlinienförmigen Verlaufs aufweisen. Im vorliegenden Fall beträgt das Drehzahlverhältnis 4 : 1, so dass der Steigungswinkel viermal grösser ist. Obwohl, in Wellenumfangsrichtung gesehen, an der schneller laufenden Welle 6 nur jeweils ein Knetelement anstatt vier Knetelementen an der langsamer laufenden Welle 5 vorgesehen ist, bewirkt dieser viermal grössere Steigungswinkel verbunden mit der vierfach grösseren Drehgeschwindigkeit eine wesentlich stärkere Produktförderung im Gehäuseteil 1b im Vergleich zu derjenigen im Gehäuseteil 1a, wenn nicht in dem die schneller laufende Welle 6 umschliessenden Gehäuse 1b ein oder mehrere Stauplatten 25 vorgesehen sind. Diese schnellere Förderung hätte zur Folge, dass ein Teil des Produktes schneller zu dem Auslaufstutzen 4 hin gelangt, d.h. die Verweilzeit entsprechend unterschiedlich ist. Im dargestellten Ausführungsbeispiel sind mehrere Stauplatten 25 in Gehäuselängsrichtung nebeneinander in den Bereichen angeordnet, die von den Knetelementen 27 nicht bestrichen werden. Bei der Ausführungsform gemäss Fig. 4 genügt jedoch z. B. auch nur eine etwa mittig in der Maschine angeordnete Stauplatte. Die Stauplatten 25 verlaufen in einer zur Welle 6 senkrechten Ebene und erstrecken sich in Gehäuseumfangsrichtung um einen ausreichenden Winkel in der Grössenordnung von 90°, so dass eine entsprechend grosse Stauwirkung erzielt wird. Dabei verlaufen die Stauplatten konzentrisch zum Umfang der Welle 6, obgleich dies nicht notwendig ist. Ein Spalt 17 zwischen dem Wellenumfang und der Innenkante der Stauplatten 25 ermöglicht eine axiale Produktförderung auch im Bereich der Stauplatten. Die Knetelemente 27 streichen an der Stauplatte 25 entlang und reinigen sie, ebenso wie die parallel zur Gehäusewand verlaufenden Knetelemente 21 und 27 die Gehäusewand reinigen, so dass Ankrustungen zerstört oder verhindert werden.

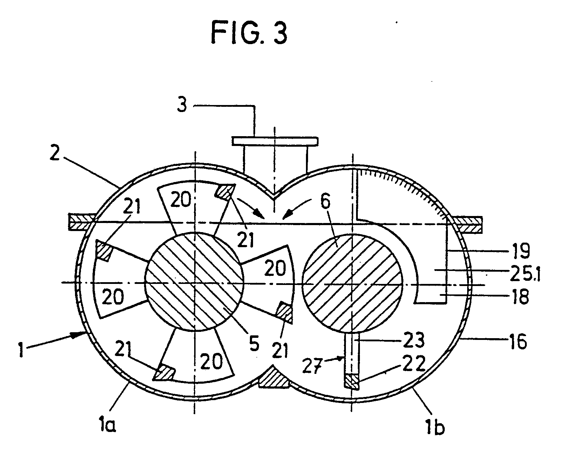

Das Ausführungsbeispiel nach Fig. 3 und 4 unterscheidet sich von demjenigen nach Fig. 2 einmal dadurch, dass die Stauplatten 25.1 am Gehäusedeckel 2 befestigt sind. Ausserdem verläuft nach diesen Ausführungsbeispielen nur der am Gehäusedeckel befestigte Teil der Stauplatte 25.1 kreisbogenförmig, während ein in den unteren Gehäuseteil hineinragender Stauplattenteil 18 eine vertikal gerichtete, äussere Begrenzungskante 19 hat. Diese Ausgestaltung ermöglicht, dass die Stauplatten 25.1 beim vertikalen Absenken des Deckels 2 in den unteren Gehäuseteil 16 eingeführt werden können.

Den Ausführungsbeispielen der Fig. 2, 3 und 4 ist u.a. gemeinsam, dass die Stauplatten 25 bzw. 25.1 auf der der langsamer drehenden Welle 5 abgekehrten Seite der Welle 6 und oberhalb des Gehäusebodens angeordnet sind.

Im übrigen unterscheiden sich die Ausführungsbeispiele der Fig. 2 und 3 von Fig. 4 in der Ausgestaltung der Knetelemente 27. Die Knetelemente 27 nach den Fig. 2 und 3 haben jeweils zwei radial von der Welle weggerichtete Knetbalken 23, 24, die an ihren äusseren Enden durch einen parallel zur Gehäusewand mit Steigung verlaufenden Knetarm 22 miteinander verbunden sind. Somit sind die Knetelemente der schneller laufenden Welle 6 rahmenförmig ausgebildet. Dagegen sind diejenigen nach Fig. 4 geschlossen.

Das Füllniveau in der Maschine kann durch eine im Gehäuseboden vor dem Auslaufstutzen 4 angeordnete Überlaufplatte 26 bestimmt werden, die sich quer über den Gehäuseboden ohne Unterbrechung zwischen beiden Gehäuseteilen 1a und 1b erstreckt, wie Fig. 1 zeigt. Das Füllniveau kann jedoch auch durch ein am Stutzen 4 vorgesehenes Auslassventil reguliert werden.

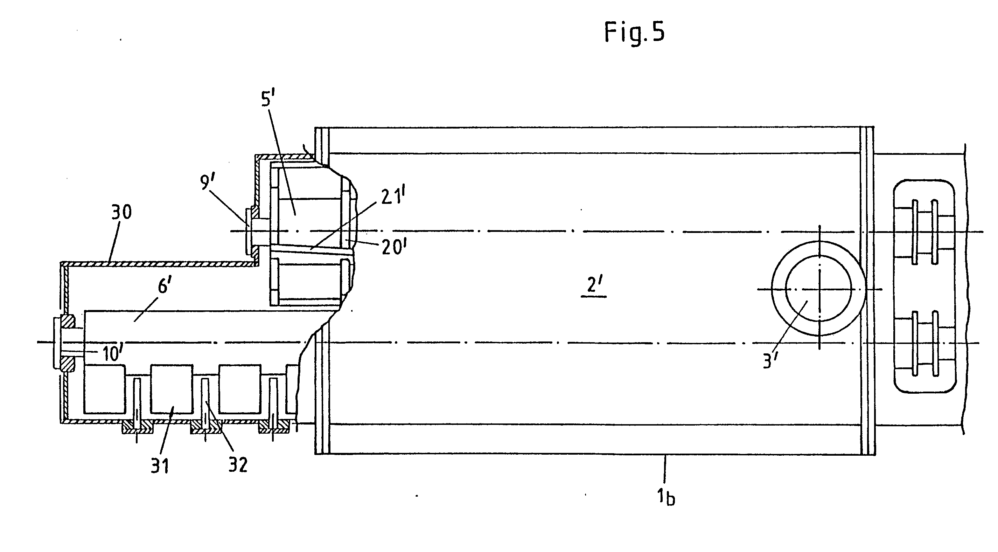

Die Ausführungsform einer erfindungsgemässen Maschine entsprechend Fig. 5 hat an ihrem Austrittsende ein Austrittsgehäuse 30, das eine Verlängerung der schneller laufenden Welle 6' umschliesst und somit im Vergleich zum Ausführungsbeispiel nach Fig. 1 eine austrittsseitige Gehäuseverlängerung bildet. Die in diesem Austrittsgehäuse 30 an der schneller laufenden Welle 6' vorgesehenen Knetelemente 31 sind im Radialquerschnitt entsprechend den in Fig. 4a - 4c dargestellten Knetelementen 27 ausgeführt, sie haben jedoch keine Steigung. Ausserdem ist zwischen ihnen jeweils ein Stauelement 32 angeordnet. Die fehlende Steigung sowie die Stauelemente 32 bewirken gemeinsam, dass in diesem Austrittsgehäuse 30 eine Abbremsung des in der Maschine behandelten Produktes verbunden mit einer stärkeren Durchmischung erreicht wird. Diese Abbremsung ist vorteilhaft, da die sich verhältnismässig schnell drehenden Knetelemente 27 der schneller laufenden Welle 6' im Bereich des Gehäuseteils 1b eine starke axiale Förderung bewirken, die sonst zu einem zu schnellen Produktaustrag führen würde. Diese starke Förderwirkung ergibt sich besonders auch durch die geschlossene Form der Knetelemente 27 gemäss Fig. 4 bzw. die vom Wellenumfang ohne Unterbrechung nach aussen verlaufende Vorderfläche 33 des Knetelementes 27 (Fig. 4c). Die Knetelemente 27 nach Fig. 4 bzw. 31 nach Fig. 5 streichen mit Seitenflächen 35 und 36 an der Stauplatte 25, 25.1 bzw. 32 entlang und reinigen sie, ebenso wie die parallel zur Gehäusewand verlaufenden Aussenflächen 37 der Knetelemente 27 nach Fig. 4 und 5 die entsprechende Gehäusewand reinigen, so dass Ankrustungen zerstört oder verhindert werden.

Vorteilhaft sind die Vorderfläche 33 und die nachlaufende Fläche 34 der Knetelemente 27 gemäss Fig. 4 evolventenförmig ausgebildet, so dass die langsamer umlaufenden Knetarme 21 der Knetelemente der langsamer laufenden Welle 5 sich mit gleichmässigem Abstand an diesen Flächen 33 und 34 entlang bewegen. Diese Evolventenform der geschlossenen Flächen 33 und 34 der Knetelemente 27 führt somit dazu, dass diese Flächen gleichmässig durch die Knetarme 21 gereinigt werden bzw. ein Anhaften des Produktes an diesen Flächen verhindert wird. Hierfür ist es ausreichend, dass sich die Knetarme 21 kontaktfrei an diesen Flächen 33 und 34 entlang bewegen.

In den Fig. 4a - 4c sind die Wellen 5, 6 und die Knetelemente 22 massiv dargestellt; jedoch versteht es sich, dass diese für die Zirkulation eines Heizmediums vorteilhaft als Hohlkörper ausgeführt sein können.

Die Maschine ist aufgrund ihrer verhältnismässig grossen freien Volumen innerhalb des Gehäuses für die Verarbeitung sowohl von pastösen als auch von rieselfähigen Produkten geeignet. Aufgrund der geometrischen Gestaltung und Kinematik wird ein Anhaften des Produktes an den Flächen der Maschine weitgehend verhindert.

**Patentansprüche**

1. Misch- und Knetmaschine mit mindestens zwei unterschiedlich schnell angetriebenen Wellen (5, 6), die von einem gemeinsamen, horizontal oder geneigt angeordneten Gehäuse (1) umschlossen sind, das für den kontinuierlichen Produktdurchlauf einen Zu- und Ablauf (3, 4) aufweist, und mit an den Wellen (5, 6) vorgesehenen Knetelementen (20, 21; 27), die zahnradartig ineinandergreifen und einen eine axiale Förderung bewirkenden Steigungswinkel aufweisen, wobei mindestens die Knetelemente (27) der schneller angetriebenen Welle (6) in Wellenlängsrichtung mit Abstand nebeneinander angeordnet sind, gekennzeichnet durch mindestens eine an dem die schneller laufende Welle (6) umschliessenden Gehäuseteil (1b) oberhalb des Gehäusebodens befestigte Stauplatte (25), die in einer zur Welle senkrecht verlaufenden Ebene zwischen in Wellenlängsrichtung nebeneinander angeordneten Knetelementen (27) verläuft.

2. Maschine nach Anspruch 1, dadurch gekennzeichnet, dass die Stauplatte (25) mit Abstand in einem Winkelbereich von mindestens angenähert 90° oder mehr den Umfang der Welle (6) umschliesst.

3. Maschine nach Anspruch 1 oder 2, dadurch gekennzeichnet, dass mindestens ein Teil der Stauplatte (25, 25.1) kreisbogenförmig verläuft.

4. Maschine nach einem der Ansprüche 1 bis 3, dadurch gekennzeichnet, dass die Stauplatte (25, 25.1) auf der der langsamer drehenden Welle (5) abgekehrten Seite der schneller drehenden Welle (6) angeordnet ist.

5. Maschine nach einem der Ansprüche 1 bis 4, dadurch gekennzeichnet, dass mindestens ein Teil von mehreren Stauplatten (25, 25.1) an einem an der Oberseite der Maschine vorgesehenen Gehäusedeckel (2) befestigt ist.

6. Maschine nach einem der Ansprüche 1 bis 5, dadurch gekennzeichnet, dass die Knetelemente der langsamer drehenden Welle (5) jeweils mehrere in Wellenlängsrichtung nebeneinander angeordnete und in einer zur Welle senkrechten Ebene verlaufende Scheiben (20) aufweisen, an deren äusserem Umfang ein Knetarm (21) befestigt ist.

7. Maschine nach Anspruch 6, dadurch gekennzeichnet, dass jedes Knetelement der langsamer laufenden Welle (5) mindestens drei Scheiben und einen diese Scheiben Verbindenden Knetarm (21) aufweist.

8. Maschine nach einem der Ansprüche 1 bis 7, dadurch gekennzeichnet, dass das Drehzahlverhältnis zwischen beiden Wellen gleich dem Verhältnis zwischen der Anzahl der an den Wellen in Umfangsrichtung nebeneinander angeordneten Knetelemente ist.

9. Maschine nach Anspruch 8, dadurch gekennzeichnet, dass die langsamer laufende Welle (5) vier in Umfangsrichtung nebeneinander angeordnete Knetelemente (20, 21) aufweist und die schneller laufende Welle (6) ein Knetelement (27), so dass das Drehzahlverhältnis zwischen beiden Wellen 1 : 4 beträgt.

10. Maschine nach einem der Ansprüche 1 bis 9, dadurch gekennzeichnet, dass die Knetelemente (27) der schneller laufenden Welle (6) aus zwei Knetbalken (23, 24) und einem diese verbindenden Knetarm (22) bestehen.

11. Maschine nach einem der Ansprüche 1 bis 9, dadurch gekennzeichnet, dass die Knetelemente (27) der schneller laufenden Welle (6) eine Vorderfläche (33) und eine nachlaufende Fläche (34) aufweisen, die ohne Unterbrechung sich vom Umfang der Welle (6) mit evolventenförmiger Krümmung nach aussen erstrecken, so dass die Knetarme (21) der langsamer laufenden Welle (5) sich in gleichmässigem Abstand an diesen Flächen (33, 34) reinigend entlangbewegen.

12. Maschine nach einem der Ansprüche 1 bis 11, dadurch gekennzeichnet, dass der die schneller laufende Welle (6) umschliessende Gehäuseteil (1b) zu einem eine Verlängerung der schneller laufenden Welle (6') umschliessenden Austrittsgehäuse (30) verlängert ist.

13. Maschine nach Anspruch 12, dadurch gekennzeichnet, dass die von dem Austrittsgehäuse (30) umschlossenen Knetelemente (31) der schneller laufenden Welle keine Steigung aufweisen, die zu einer Förderung in Austrittsrichtung führt.

14. Maschine nach Anspruch 13, dadurch gekennzeichnet, dass zwischen den Knetelementen (31) in dem Austrittsgehäuse (30) Stauelemente (32) vorgesehen sind.

**Claims**

1. Mixing and kneading machine with at least two differently fast driven shafts (5, 6) which are surrounded by a common housing (1) arranged horizontally or inclined which has an infeed and outflow (3, 4) for continuous product throughput and kneading elements (20, 21; 27) provided on the shafts (5, 6) which engage in one another in toothed wheel fashion and have a pitch angle effecting axial feeding, whereby at least the kneading elements (27) of the faster driven shaft (6) are arranged at distances from one another in the longitudinal direction of the shaft, characterised by at least one damming plate (25) fixed above the housing floor to the housing part (1b) surrounding the faster running shaft (6) which runs in a plane running perpendicular to the shaft between kneading elements (27) arranged next to one another in the longitudinal direction of the shaft.

2. Machine according to claim 1, characterised in that the damming plate (25) surrounds the periphery of the shaft (6) at a distance and over an angular region of at least substantially 90° or more.

3. Machine according to claim 1 or 2, characterised in that at least a part of the damming plate (25, 25.1) runs in the shape of a circular arc.

4. Machine according to one of Claims 1 to 3, characterised in that the damming plate (25, 25.1) is arranged on the side of the faster turning shaft (6) facing away from the slower turning shaft (5).

5. Machine according to one of Claims 1 to 4, characterised in that at least a part of several damming plates (25, 25.1) is fixed to a housing lid (2) provided on the upper side of the machine.

6. Machine according to one of Claims 1 to 5, characterised in that the kneading elements of the slower turning shaft (5) have in each case several discs (20) running in a plane perpendicular to the shaft and arranged adjacent one another in the longitudinal direction of the shaft, on the outer peripheries of which a kneading arm (21) is fixed.

7. Machine according to Claim 6, characterised in that each kneading element of the slower running shaft (5) has at least three discs and a kneading arm (21) connecting these discs.

8. Machine according to one of Claims 1 to 7, characterised in that the rotational speed ratio between both the shafts is the same as the ratio between the number of the kneading elements arranged next door to one another in the peripheral direction on the shafts.

9. Machine according to Claim 8, characterised in that the slower running shaft (5) has four kneading elements (20, 21) arranged next to one another in the peripheral direction and the faster running shaft (6) has one kneading element (27) so that the rotational speed ratio between both shafts amounts to 1 : 4.

10. Machine according to one of Claims 1 to 9, characterised in that the kneading elements (27) of the faster running shaft (6) consist of two kneading beams (23, 24) and a kneading arm (22) connecting these.

11. Machine according to one of Claims 1 to 9, characterised in that the kneading elements (27) of the faster running shaft (6) have a front surface (33) and a trailing surface (34) which extend without interruption from the periphery of the shaft (6) with an evolvent shaped curvature outwardly so that the kneading elements (21) of the slower running shaft (5) move along at an even distance from the surfaces (33, 34) thereof in cleaning fashion.

12. Machine according to one of Claims 1 to 11, characterised in that the housing part (1b) surrounding the faster running shaft (6) extends to an outlet housing (30) surrounding an extension of the faster running shaft (6').

13. Machine according to Claim 12, characterised in that the kneading element (31) surrounded by the outlet housing (30) of the faster running shaft has no pitch which leads to feeding in the outlet direction.

14. Machine according to Claim 13, characterised in that between the kneading elements (31) damming elements (32) are provided in the outlet housing (30).

**Revendications**

1. Machine à mélanger et pétrir qui comprend au moins deux arbres (5, 6,) entraînés à des vitesses différentes et entourés par une enveloppe commune (1) horizontale ou inclinée comportant une entrée et une sortie (3, 4) pour le passage continu des produits, et des éléments de pétrissage (20, 21, 27), montés sur les arbres (5, 6), qui engrènent les uns dans les autres et comportent un pas de vis produisant un déplacement dans le sens axial, ceux au moins des éléments de pétrissage (27) qui sont montés sur l'arbre (6) entraîné les plus rapidement étant disposés à une certaine distance les uns des autres dans le sens de la longueur de l'arbre, caractérisée en ce qu'elle comporte au moins une plaque d'arrêt (29) qui est fixée à la partie (1b) de l'enveloppe qui entoure l'arbre (6), qui tourne le plus rapidement, au-dessus du fond de l'enveloppe et qui se trouve dans un plan perpendiculaire à l'arbre entre des éléments de pétrissage (27) disposés les uns à côté des autres dans le sens de la longueur de l'arbre.

2. Machine selon la revendication 1, caractérisée en ce que la plaque d'arrêt (23) entoure la périphérie de l'arbre (6) à une certaine distance de lui, sur une zone angulaire d'environ 90° ou davantage.

3. Machine selon l'une des revendications 1 ou 2, caractérisée en ce qu'une partie au moins de la plaque d'arrêt (25, 25.1) a une forme en arc de cercle.

4. Machine selon l'une des revendications 1 à 3, caractérisée en ce que la plaque d'arrêt (25, 25.1) est placée du côté de l'arbre (6) qui tourne le plus rapidement qui est le plus éloigné de l'arbre (5) qui tourne le moins rapidement.

5. Machine selon l'une des revendications 1 à 4, caractérisée en ce qu'une partie au moins des plaques d'arrêt (25, 25.1) est fixée à un couvercle (2) situé à la partie supérieure de la machine.

6. Machine selon l'une des revendications 1 à 5, caractérisée en ce que les éléments de pétrissage de l'arbre (5) qui tourne le plus lentement comportent chacun plusieurs disques (20) qui sont orientés suivant des plans perpendiculaires à l'arbre et sont disposés les uns à côté des autres dans le sens de la longueur de l'arbre et qui portent, fixé à leur périphérie extérieure, un bras de pétrissage (21).

7. Machine selon la revendication 6, caractérisée en ce que chacun des éléments de pétrissage de l'arbre (5) qui tourne le plus lentement comporte au moins trois disques et un bras de pétrissage (21) réliant ces disques.

8. Machine selon l'une des revendications 1 à 7, caractérisée en ce que le rapport des vitesses de rotation des deux arbres est égal au rapport des nombres d'éléments de pétrissage montés les uns à côté des autres dans le sens de la périphérie sur les arbres.

9. Machine selon la revendication 8, caractérisée en ce que l'arbre (5) qui tourne le plus lentement comporte quatre éléments de pétrissage (20, 21) montés les uns à côté des autres dans le sens de la périphérie et que l'arbre (6) qui tourne le plus rapidement comporte un élément de pétrissage (27), de sorte que le rapport des vitesses de rotation des deux arbres est de 1 à 4.

10. Machine selon l'une des revendications 1 à 9, caractérisée en ce que les éléments de pétrissage (27) de l'arbre (6) qui tourne le plus rapidement sont constitués par deux barres de pétrissage (23, 24) et par un bras de pétrissage (22) qui les relie.

11. Machine selon l'une des revendications 1 à 9, caractérisée en ce que les éléments de pétrissage (27) de l'arbre (6) qui tourne le plus rapidement comportent une surface avant (33) et une surface arrière (34) qui s'étendent sans interruption vers l'extérieur à partir de la périphérie de l'arbre (6) incurvée en forme de développante, de sorte que les bras de pétrissage (21) de l'arbre (5) qui tourne le plus lentement se déplacent toujours à la même distance de ces surfaces (33, 34) et les nettoient.

12. Machine selon l'une des revendications 1 à 11, caractérisée en ce que la partie (1b) de l'enveloppe qui entourne l'arbre (6) qui tourne le plus rapidement se prolonge par une enveloppe de sortie (30) entourant un prolongement de l'arbre (6') qui tourne le plus rapidemnt

13. Machine selon la revendication 12, caractérisée en ce que les éléments de pétrissage (31) de l'arbre qui tourne le plus rapidement qui sont entourés par l'enveloppe de sortie (30) n'ont aucune pente ascendante susceptible de provoquer un déplacement du produit vers la sortie.

14. Machine selon la revendication 13, caractérisée en ce qu'elle comporte, entre les éléments de pétrissage (31), dans l'enveloppe de sortie (30), des éléments d'arrêt (32).

FIG. 1

0 144 092

# FIG. 2

# FIG. 3

## Fig. 4a

## Fig. 4b

Fig. 4c

Fig.5

0 144 092